# EUROPÄISCHE PATENTANMELDUNG

(11) **EP 0 847 844 A1**
(43) Veröffentlichungstag der Anmeldung: **17.06.1998**
(21) Anmeldenummer: 97120442.5
(22) Anmeldetag: 21.11.1997
(51) Int. Cl.: B29C 35/06, B29C 31/00

(54) **Vorrichtung zur Vulkanisation von strangförmigen, aus Kautschukmischungen oder Kunststoffen bestehenden Profilen**

(30) Priorität: 16.12.1996 DE 19652313
(71) Anmelder: Paul Troester Maschinenfabrik, D-30519 Hannover (DE)
(72) Erfinder: Skubich, Rolf, Dipl.-Ing., 30853 Langenhagen (DE)
(74) Vertreter: Junius, Walther, Dr.

(57) **Zusammenfassung**

Vorrichtung zur Vulkanisation von strangförmigen, aus Kautschukmischungen bestehenden Profilen, bestehend aus einer beheizten Wanne (7), in welcher sich ein Wärmeträgerbad (8) befindet, durch welches die Profile (9) hindurchgefördert werden, und einem mit seinem Untertrum in das Bad eintauchenden Förderband (1). Das Förderband (1) besteht aus Polytetrafluorethylen (4) und einer Verstärkung (2,3) aus einem als endloses homogenes Band gefertigtem laminierten Fasergewebe. Ein derartiges Förderband zeichnet sich durch ruhigen Lauf über die Umlenkrollen aus, es zentriert sich selbst und zeigt daher auch nach langer Laufdauer nur geringe Abnutzungserscheinungen am Rand auf. Dieses Band weist nur geringe Temperaturdehnung auf und ist sehr flexibel.

## Beschreibung

Die Erfindung betrifft eine Vorrichtung zur Vulkanisation von strangförmigen, aus Kautschukmischungen oder Kunststoffen bestehenden Profilen, bestehend aus einer beheizten Wanne, in welcher sich ein Wärmeträgerbad befindet, durch welches die Profile hindurchgefördert werden, und einem mit seinem Untertrum in das Bad eintauchenden Förderband.

Solche Vorrichtungen sind in verschiedenen Ausführungsformen auch mit Gliederbändern oder Tauchrollen seit Jahrzehnten bekannt. Als Wärmeträgerbad wird vorzugsweise ein aufgeschmolzenes Salz, manchmal auch ein Glykol oder deren Gemische verwendet. In dieses Bad werden beispielsweise aus einer Extrusionsvorrichtung kommende Profile geführt, damit sie im Bad eine bestimmte Zeit auf eine für deren Vulkanisation erforderlichen Temperatur gebracht und gehalten werden. Da die zu vulkanisierenden Profile zumeist spezifisch leichter als das Bad sind, ist ein mit seinem Untertrum in das Bad eintauchendes Förderband vorgesehen. Dieses hält die aufschwimmenden Profile unter der Oberfläche des Bades.

Bäder aus einem aufgeschmolzenem Salz sind erheblich aggressiv, weshalb die Wanne aus einem inerten Material hergestellt wird und das Förderband aus Edelstahl gefertigt ist. Die Verwendung dieser aus Edelstahl gefertigten Förderbänder ist problematisch: Die Förderbänder sind aus einem Band endlicher Länge zu einem endlosen Band zusammengeschweißt. Sie laufen daher nicht völlig ruckfrei über die Umkehrrollen. Stahlbänder sind empfindlich gegenüber Temperaturschwankungen. Solche Temperaturschwankungen treten bei den Stahlbändern schon durch unterschiedliche Kontaktflächen für den Wärmeübergang bei wechselnder Anlage des zu vulkanisierenden Profiles an dem Band auf. Denn die Extrusionstemperatur des zu vulkanisierenden Profiles ist erheblich niedriger als die Badtemperatur. Der ungleichmäßige Lauf solcher Stahlbänder macht einen erheblichen Aufwand für Führungen des Stahlbandes erforderlich. Das seitliche Ausweichen der Stahlbänder führt häufig zu mechanischen Beschädigungen des Randes der Stahlbänder und/oder der Wanne und/oder der Führungen und verringert deren Lebensdauer. Diesem Nachteil begegnete man durch eine besonders aufwendige Bandführung und teilweise durch eine Steuerung an den Umlenkstellen. Das macht eine solche Vulkanisationsvorrichtung jedoch sehr aufwendig und teuer.

Stahlbänder sind relativ unflexibel. Daher erfordern sie Umlenkrollen großen Durchmessers. Sie sind aus diesem Grunde auch schwerer zu montieren. Sie bedürfen Spannrollen starker Vorspannung. Diese Umstände führen zu einem verhältnismäßig großen Gehäusequerschnitt und damit zu größerem Raumbedarf.

Diesen Nachteilen der Stahlbänder versuchte man schon vor mehr als einem Jahrzehnt in der eigenen Versuchsanstalt durch die Verwendung von Förderbändern aus dem Werkstoff Silikon zu begegnen. Diese waren aber den hohen Dauerbelastungen durch die Salzbadtemperatur und die erforderliche Spannung nicht gewachsen. Die Bänder wurden nach kurzer Laufdauer weich, ihre Ränder fransten aus und das Band selbst löste sich nach einiger Zeit auf.

Die Erfindung vermeidet die Nachteile des Standes der Technik. Es ist die Aufgabe der Erfindung, mit einfachen Mitteln eine Möglichkeit zu schaffen, einen regelmäßigen Lauf des Förderbandes ohne Steuerungsaufwand bei niedrigem Anschaffungspreis, leichter Montage und hoher Bandfestigkeit zu erreichen.

Die Erfindung besteht darin, daß das Förderband aus Polytetrafluorethylen und einer Verstärkung aus einem als endloses homogenes Band gefertigtem laminierten Fasergewebe besteht.

Ein derartiges Förderband zeichnet sich durch ruhigen Lauf über die Umlenkrollen aus, es zentriert sich selbst und zeigt daher auch nach langer Laufdauer nur geringe Abnutzungserscheinungen, selbst am Rand. Die Selbstzentrierung hat ihre Ursachen in der sehr glatten Oberfläche des Bandes sowie an der geringen Adhäsion des im Bad befindlichen Wärmeträgers an dem Band.

Dieses Band weist nur geringe Temperaturdehnung auf und dehnt sich auch bei mechanischer Belastung nur in geringem Maße. Da dieses Band auch gegenüber einem Stahlband sehr flexibel ist, genügen für seine Spannung geringere Spannkräfte. Die ganze Förderanlage kann daher auch mit Umlenkrollen geringeren Durchmessers und auch insgesamt mit niedrigerer Bauhöhe gebaut werden. Diese Vorteile münden in dem weiteren Vorteil, daß nicht nur das Förderband selbst einen niedrigeren Anschaffungspreis als das Stahlband hat, sondern daß auch die gesamte Vulkanisieranlage in der Anschaffung sehr viel preiswerter ist.

Die Selbstzentrierung dieses Förderbandes kann durch die Verwendung von mit Nuten versehenen balligen Umlenkrollen noch weiter gefördert werden.

Dieses Förderband ist durch sein gegenüber einem Stahlband geringeres Eigengewicht und seine gegenüber einem Stahlband größere Flexibilität schnell und leicht auf die Umlenkrollen und die zwischen den Umlenkrollen angeordneten Unterstützungen aufzulegen und auch wieder abzunehmen. Das macht die gesamte Förderanlage noch preiswerter und unempfindlicher gegen Betriebsunterbrechungen durch Materialverschleiß. Auch wird sie wartungsfreundlicher.

Die bei Förderbändern gefürchtete Gefahr der Kantenbeschädigungen kann man hier bei diesem Band noch weiter dadurch verringern, daß die Kanten des Förderbandes mit je einem Saum versehen sind. Dieser Saum kann die Form eines U-förmig um die Kante des Förderbandes gelegten aufkaschierten Bandes aus dem gleichen Material, nämlich Polytetrafluorethylen und einer eingelegten Verstärkung aus einem als endloses homogenes Band gefertigtem laminierten Glasfasergewebe, haben.

Die Glätte der Oberfläche dieses aus Polytetrafluorethylen und einer eingelegten Verstärkung aus einem als endloses homogenes Band gefertigtem laminierten Glasfasergewebe hergestellten Förderbandes bringt es mit sich, daß anstelle der bei üblichen Förderbändern zwischen den Umlenkrollen angeordneten Tragrollen das Förderband hier zwischen den Umlenkrollen auf Stützen, die vorzugsweise als aus Blech oder Kunststoff gefertigten Formkörper gebildet sind, gleiten kann. Diese Stützen sind fest mit der Hubeinrichtung für das Förderband oder dem zentralen Träger der Umlenkrollen verbunden. Durch die Verwendung der als Formkörper gebildeten Stützen anstelle von Tragrollen entfallen eine größere Anzahl störungsanfälliger, da nur schwer gegen das heiße flüssige und aggressive Medium abzudichtende Lageraugen. Das macht die gesamte Vulkanisieranlage noch preiswerter und unempfindlicher gegen Betriebsunterbrechungen durch Materialverschleiß.

Es ist von erheblichem Vorteil, wenn diese keine beweglichen Teile aufweisenden Stützen aus korrosionsfestem Material, insbesondere Edelstahlblech oder Kunststoff, geformt sind. Dabei können die Formkörper eine Wannenform aufweisen.

Wesentliche Vorteile dieses erfindungsgemäß verwendeten Förderbandes bestehen auch in der Antihaftfunktion des Bandes, d.h. in der nur äußerst geringen Mitnahme von Partikeln des Wärmeträgers. Das macht sich insbesondere beim Umlenken des Förderbandes um die Umlenkrollen positiv bemerkbar. Die nur sehr geringen aufzuwendenden Spannkräfte sind eine Folge hiervon. Weitere Vorteile bestehen in dem geringen Wärmeinhalt des Bandes. Das bringt einen sehr geringen Wärmeentzug aus dem Bad mit sich, wenn der Obertrum des Bandes das Bad verläßt. Ein wesentlicher Vorteil liegt auch darin, daß existierende Anlagen leicht auf den Betrieb mit dem neuen Förderband umgerüstet werden können.

Das Wesen der Erfindung ist nachstehend anhand eines in der Zeichnung schematisch dargestellten Ausführungsbeispieles näher erläutert. Es zeigen:

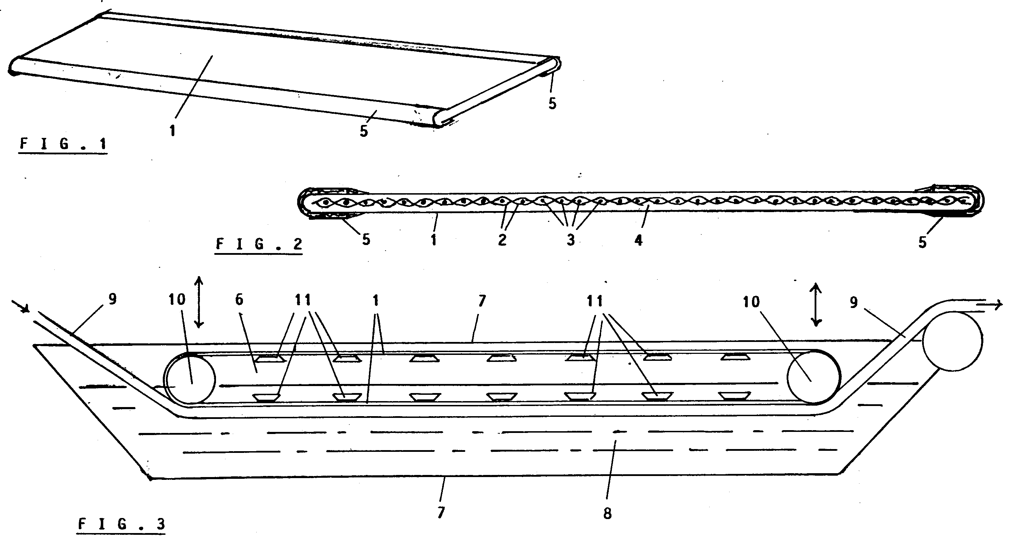

- Fig.1: eine Ansicht des Transportbandes,
- Fig.2: einen Schnitt durch das Tranportband,
- Fig.3: einen Längsschnitt durch die Vulkanisationsanlage.

Das Transportband 1 besteht aus einem aus Schußfäden 2 und Kettfäden 3 aufgebauten Gewebe, welches in eine Schicht aus Polytetrafluorethylen 4 eingebettet ist. Dieses Transportband ist beidseitig gesäumt durch zwei aufkaschierte Streifen 5, die ihrerseits ebenfalls aus einem aus Schußfäden 2 und Kettfäden 3 aufgebauten Gewebe bestehen, welches ebenfalls in eine Schicht aus Polytetrafluorethylen 4 eingebettet ist.

Dieses Transportband 1 ist in eine Transportanlage 6 eingebaut, welche in einer Wanne 7 für die Aufnahme eines Vulkanisationsbades 8 befindlich ist. Beispielsweise aus einer Extrusionsanlage kommende, aus Kautschukmischungen bestehende Profilstränge 9 sind durch diese Wanne 7 so geführt, daß sie in das Vulkanisationsbad 8 eintauchen und von dem Transportband 1 transportiert und gleichzeitig am Aufschwimmen gehindert werden. Die Transportanlage 6 weist zwei Umlenkräder 10 für das Transportband 1 und zwischen diesen wannenförmige Stützen 11 aus korrosionsfestem Werkstoff, z.B. Edelstahl auf, auf denen das Trans-portband 1 gleitet. Entsprechende Spannrollen sorgen für die notwendige Bandspannung. Diese ist jedoch aufgrund der Materialeigenschaften dieses Förderbandes nur gering.

Die gesamte Förderbandeinrichtung ist für Reinigungs-, Wartungs- und Bedienarbeiten heb- und senkbar angeordnet.

### Liste der Bezugszeichen

- 1: Transportband
- 2: Schußfaden
- 3: Kettfaden
- 4: Schicht aus Polytetrafluorethylen
- 5: aufkaschierte Streifen
- 6: Transportanlage
- 7: Wanne
- 8: Vulkanisationsbad
- 9: Profilstrang
- 10: Umlenkrad
- 11: Stützen

## Patentansprüche

1. Vorrichtung zur Vulkanisation von strangförmigen, aus Kautschukmischungen oder Kunststoffen bestehenden Profilen,
bestehend aus einer beheizten Wanne, in welcher sich ein Wärmeträgerbad befindet, durch welches die Profile hindurch gefördert werden, und einem mit seinem Untertrum in das Bad eintauchenden Förderband,
dadurch gekennzeichnet,
daß das Förderband (1) aus Polytetrafluorethylen mit einer Verstärkung aus einem als endloses homogenes Band gefertigtem laminierten Fasergewebe besteht.

2. Vorrichtung nach Anspruch 1,
dadurch gekennzeichnet,
daß die Kanten des Förderbandes mit je einem Saum versehen sind.

3. Vorrichtung nach Anspruch 1,
dadurch gekennzeichnet,
daß der Saum die Form eines U-förmig um die Kante des Förderbandes gelegten aufkaschierten Bandes (5) hat.

4. Vorrichtung nach Anspruch 1,
dadurch gekennzeichnet,
daß das Förderband (1) zwischen den Umlenkrollen (10) auf Stützen (11) gleitet, welche fest mit der zentralen Träger der Umlenkrollen (10) verbunden sind.

5. Vorrichtung nach Anspruch 1,
dadurch gekennzeichnet,
daß die Stützen (11) aus korrosionsfestem Werkstoff, vorzugsweise Blech oder Kunststoff geformt sind.

6. Vorrichtung nach Anspruch 1,
dadurch gekennzeichnet,
daß die Formkörper (11) eine wannen- oder bügelartige Form aufweisen.

7. Vorrichtung nach Anspruch 1,
dadurch gekennzeichnet,
daß das Fasergewebe einen wesentlichen Anteil von Glasfasern aufweist.

8. Vorrichtung nach Anspruch 1,
dadurch gekennzeichnet,
daß die Umlenkräder ballige Trommelflächen, vorzugsweise mit Nuten aufweisen.
